# EUROPEAN PATENT APPLICATION

(11) **EP 4 647 267 A1**
(43) Date of publication of application: **12.11.2025**
(21) Application number: 25174982.6
(22) Date of filing: 08.05.2025
(51) Int. Cl.: B60B 3/14

(54) **WHEEL ASSEMBLY FOR A ROAD VEHICLE EQUIPPED WITH A CENTRAL SINGLE NUT FASTENING SYSTEM**

(30) Priority: 08.05.2024 IT 202400010342
(71) Applicant: Poggipolini S.p.A., 40068 San Lazzaro di Savena (IT); Cavani, Gian-Luigi, 41057 Spilamberto (MO) (IT); Burani, Miria, 41058 Vignola (MO) (IT)
(72) Inventor: CAVANI, GIAN-LUIGI, 41057 SPILAMBERTO (MO) (IT); BURANI, MIRIA, 41058 VIGNOLA (MO) (IT)
(74) Representative: Studio Torta S.p.A.

(57) **Abstract**

A wheel assembly for a road vehicle comprising: a rim (2) of a wheel, a rotary hub (3), and a fastening system (1), which secures the rim (2) and the hub (3). The rim (2) has a plurality of compartments (6), each has the shape of a wedge and a first open side in a rear plane of the rim (2) perpendicular to a rotation axis (7) of the wheel and a second open side perpendicular to the first side and facing the rotation axis (7) of the wheel. The fastening system (1) has a plurality of pulling inserts (8), each having the shape of a wedge and being designed to be inserted into a corresponding compartment (6) obtained in the rim (2). The hub (3) has a plurality of housings (9), each shaped so as to accommodate a respective pulling insert (8) allowing the pulling insert (8) to axially slide within the housing (9).

## Description

### CROSS-REFERENCE TO RELATED APPLICATIONS

This patent application claims priority from Italian patent application no. 102024000010342 filed on May 8,2024 the entire disclosure of which is incorporated herein by reference.

### TECHNICAL FIELD

This invention relates to a wheel assembly for a road vehicle equipped with a central single-nut fastening system.

### PRIOR ART

A wheel fastening system with a single central nut, for example of the type described in patent application WO9731791A1, comprises a single nut arranged centrally, that is, coaxially with the wheel axle.

The use of single-nut fastening systems is no longer limited to racing vehicles, but is also spreading to touring car vehicles whose sporting characteristics are to be accentuated.

A known wheel fastening system with a single central nut generally involves a nut with a conical shape that is coupled with a corresponding conical shape of a central portion of the rim: the fastening, through the thread, brings the conical shape of the nut into contact with the conical shape of the rim, and as the fastening torque increases, the friction increases until the nut is locked.

In a known wheel fastening system with a single central nut, the fastening torque alone (however high) will never be able to transmit the braking and acceleration torques solely by friction; it is, therefore, necessary to provide appropriate pulling devices consisting of cylindrical pulling pins that fit into their respective seats; the rigidity and precision quality of the pulling system determine the actual micromovement of rotation between the rim and the hub. The pulling system made up of cylindrical pulling pins subjected to buckling is not and cannot be considered infinitely rigid, and even the quality of precision cannot ignore physiological phenomena such as thermal deformation (or expansion - it is well known that in order to facilitate disassembly of the wheel when hot, the play between the housing and the cylindrical pulling pin is increased, unfortunately losing precision). These physiological limits lead to an inevitable *"relative movement",* which in some cases is imperceptible and in other cases is the direct cause of loss of fastening (or unscrewing of the nut).

Consequently, a problem with known single-nut fastening systems is the progressive loss of fastening preload, which in the long run can result in the loss of the wheel during driving; to avoid the loss of fastening preload, single-nut fastening systems are currently fitted with very high fastening torques (in the order of 700-800 Nm) to achieve seizing of the contact surfaces. That is to say, during fastening, more than half of the fastening torque is known to seize (deform) the conical contact surface, which is irreversibly deformed to ensure the safety of the fastening itself. The residual fastening torque increases the axial tension between the various components involved in the fastening process; therefore, the fastening torque that actually discharges on the axial tension (fastening pack) is very small compared to the fastening torque that is applied, and increasing the fastening torque does not lead to a proportional increase in the axial tension of the pack, but mainly to an increase in wear and friction of the single nut.

However, this mode of operation (although effective) entails several problems: fastening requires the use of special spanners with an extremely long arm (even more than one and a half metres), excessive wear between the single nut and the rim compromises the repeatability of fastening, and the single nut must be replaced frequently (in some situations even every time it is fitted, so that the single nut is a disposable component), and with a certain frequency the single nut is no longer detachable and, therefore, the rim must be destroyed to remove it.

Patent application US2019111729A1 represents the closest state of the art and describes a fastening device for a wheel rim on a wheel hub comprising: a central screw that has an external thread on a fastening portion that engages an internal thread of a wheel hub step; a turnbuckle that produces a force-fit connection between the wheel hub step and the central screw; and a locking device that prevents inadvertent release of the central screw.

### DESCRIPTION OF THE INVENTION

The aim of this invention is to provide a wheel assembly for a road vehicle equipped with a central single-nut fastening system that is free of the drawbacks described above (and in particular allows stable assembly even with relatively low fastening torques) and, at the same time, is also easy and inexpensive to manufacture.

According to this invention, a wheel assembly for a road vehicle equipped with a central single-nut fastening system, as set out in the attached claims, is provided.

The claims describe preferred embodiments of this invention forming an integral part of the present specification.

### BRIEF DESCRIPTION OF THE DRAWINGS

This invention will now be described with reference to the accompanying drawings that illustrate some non-limiting embodiments thereof, in which:
- Figure 1 is a perspective view with parts removed for clarity of a wheel fastening system with a single central nut produced according to this invention;
- Figure 2 is a view in longitudinal section of the fastening system in Figure 1;

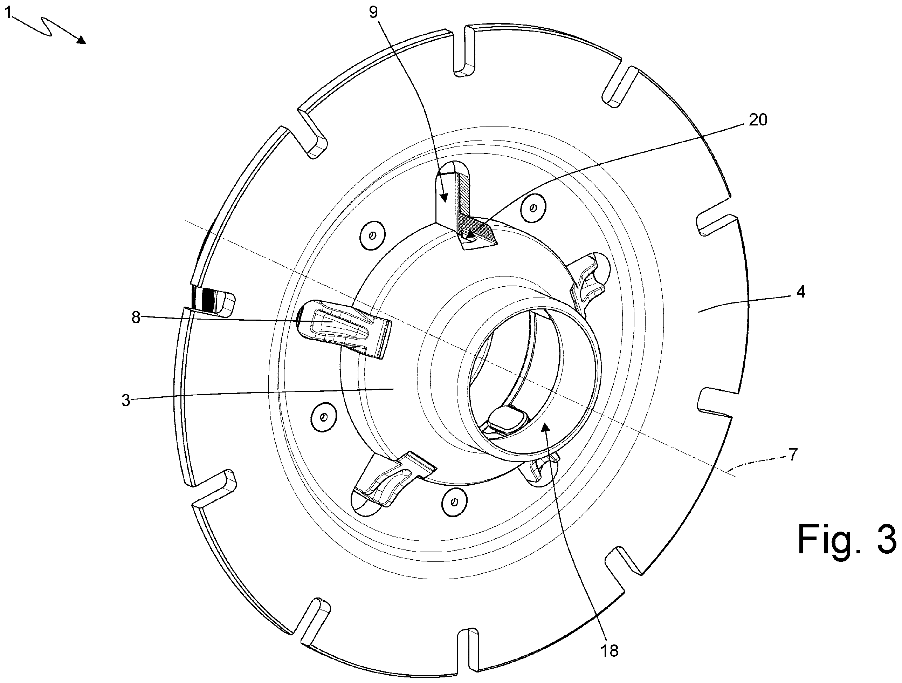

- Figure 3 is a perspective view of a component of the fastening system in Figure 1;
- Figure 4 is an exploded perspective view of three components of the fastening system in Figure 1;
- Figure 5 is a perspective and partially exploded view of a component of the fastening system in Figure 1;
- Figure 6 is a perspective and partially exploded view of a component of the fastening system in Figure 1;
- Figure 7 is a view in longitudinal section of some components of the fastening system in Figure 1;
- Figure 8 is a cross-section view along the line VIII-VIII of some components of the fastening system in Figure 1;
- Figure 9 is a perspective and partially exploded view of a component of the fastening system in Figure 1;
- Figure 10 is a view in longitudinal section of some components of the fastening system in Figure 1;
- Figure 11 is a perspective view with parts removed for clarity of a variant of the fastening system in Figure 1;
- Figure 12 is a perspective view of a tool that can be used for opening or closing the fastening system in Figure 11; and
- Figure 13 illustrates on an enlarged scale a detail of Figure 3 in two different fastening steps.

### PREFERRED EMBODIMENTS OF THE INVENTION

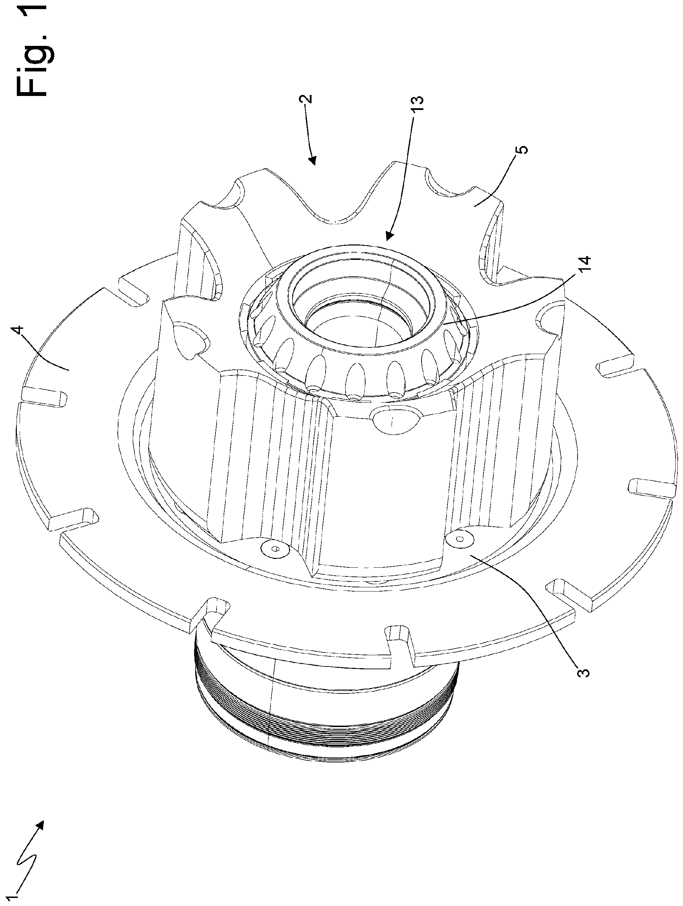

In Figure 1, the reference number 1 globally denotes a wheel fastening system of a road vehicle (typically a car) with a central single nut.

In particular, the fastening system 1 secures a rim 2 that supports a tyre (not illustrated) and is only partially illustrated in the attached figures (that is, only a central part of the rim 2 is reproduced in the attached figures for clarity) and a rotary hub 3 of the road vehicle coupled to a brake disc bell 4.

In other words, Figure 1 shows a wheel assembly of the road vehicle comprising the rim 2, the rotary hub 3 coupled to the brake disc bell 4, and the fastening system 1 secures the rim 2 and hub 3 together.

In the embodiment illustrated in the attached figures, the rim 2 has five spokes 5 (only partially illustrated) that are symmetrically distributed around the rotation axis of the wheel and originate radially from a central core of the rim 2; according to other embodiments not illustrated, the number and shape of the spokes 5 of the rim 2 may be different.

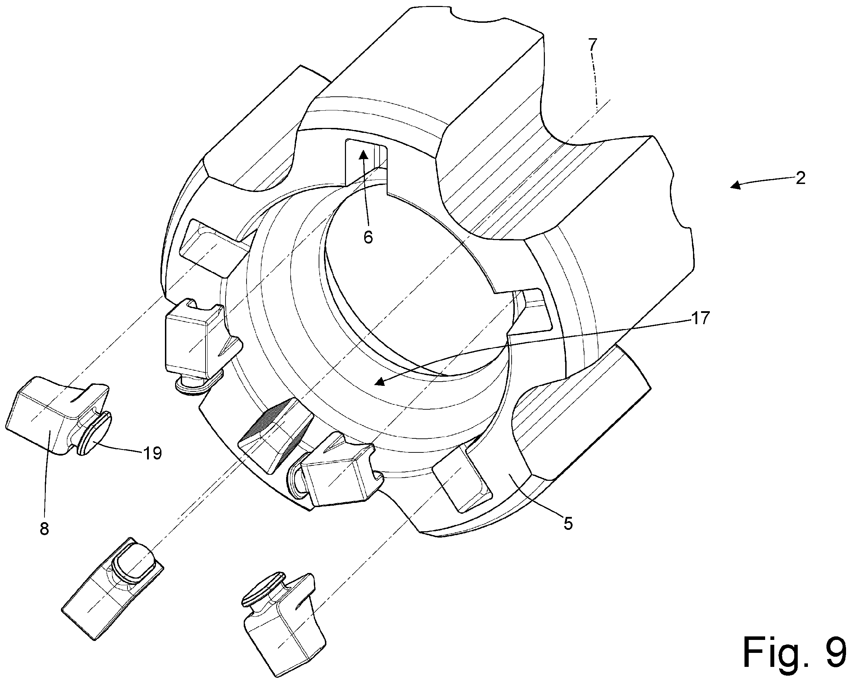

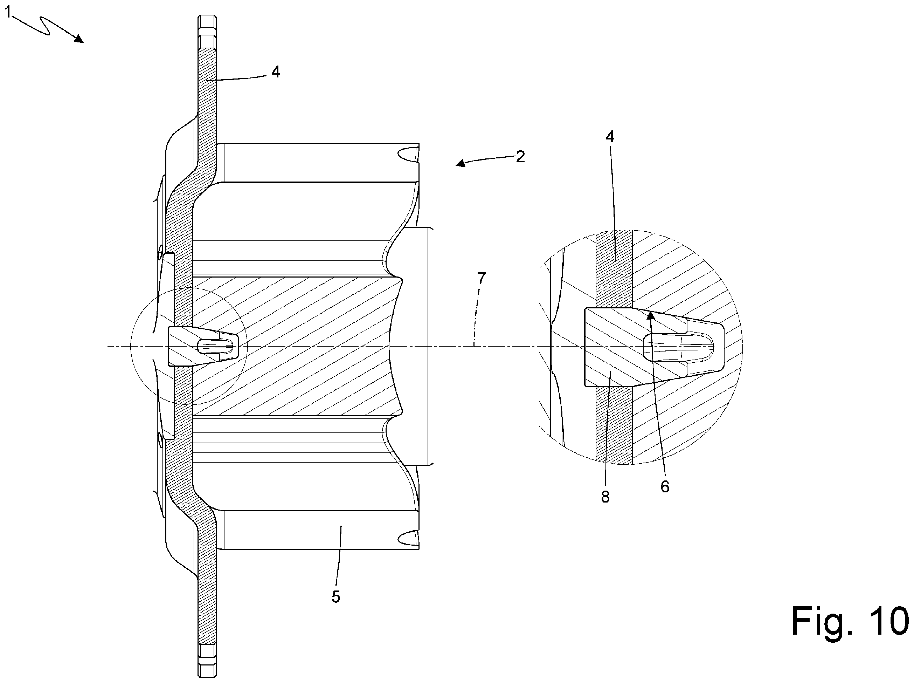

According to what is better illustrated in Figure 9, the rim 2 has a plurality of compartments 6, each having the shape of a wedge and having a first open side in a rear plane of the rim 2 perpendicular to a rotation axis 7 of the wheel and a second open side perpendicular to the first side and facing the rotation axis 7 of the wheel (that is, each compartment 6 has two open sides perpendicular to each other). As best illustrated in Figure 10, each compartment 6 has a wedge shape (that is, a truncated cone shape) tapering from the outside inwards.

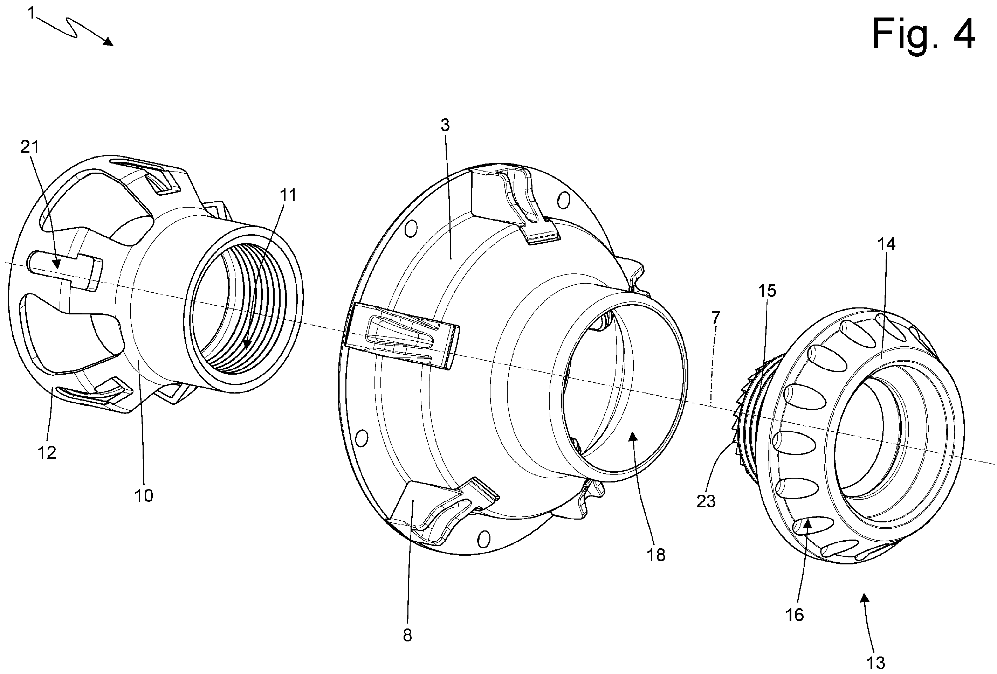

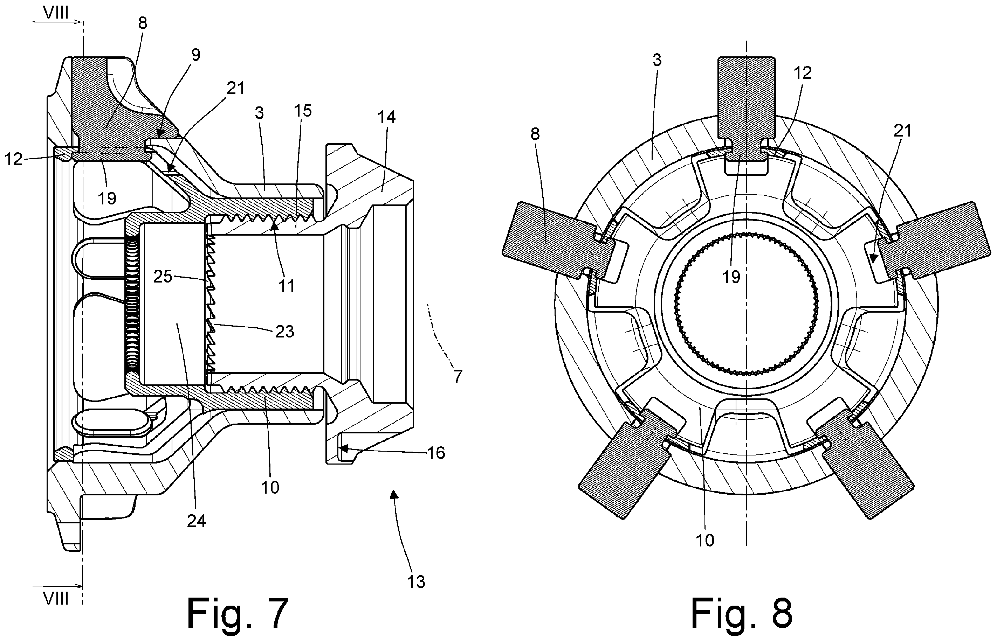

As best illustrated in Figures 4 to 10, the fastening system 1 comprises a plurality of pulling inserts 8, each of which has a wedge shape and is shaped to fit (without significant play) within a corresponding compartment 6 formed in the rim 2 (that is, the pulling inserts 8 have a wedge shape that is complementary to the wedge shape of their respective compartments 6). The pulling inserts 8 are carried by the hub 3 and are angularly integral with the hub 3 to rotate together with the hub 3 around the rotation axis 7. In particular, the hub 3 has a plurality of housings 9, each shaped so as to accommodate a respective pulling insert 8 allowing the pulling insert 8 to axially slide (that is, parallel to the rotation axis 7) within the housing 9.

According to one preferred embodiment, a single pulling insert 8 is provided for each spoke 5 of the rim 2 so that for each spoke 5 of the rim 2 there is one single compartment 6 designed to receive a respective pulling insert 8.

According to what is better illustrated in Figures 4, 6, and 7, the fastening system 1 comprises a fastening bell 10, which is centrally provided with a threaded hole 11 and has a plurality of pushing elements 12, each of which is designed to engage a respective pulling insert 8 so as to axially push (that is, parallel to the rotation axis 7) the pulling insert 8 into a respective compartment 6 of the rim 2. In addition, the fastening system 1 comprises a screw 13 (well illustrated in Figure 4) provided with a head 14 and with an externally threaded cylindrical body 15 designed to be screwed into the threaded hole 11 of the bell. The screw 13 is preferably centrally drilled (that is, it has a central through-hole running through it from side to side) and the head 14 of the screw 13 has an annular shape with a series of recesses 16 that are cylindrical in shape and axially oriented. According to a preferred embodiment illustrated in the attached figures, the screw head 14 has a truncated cone shape on the outside.

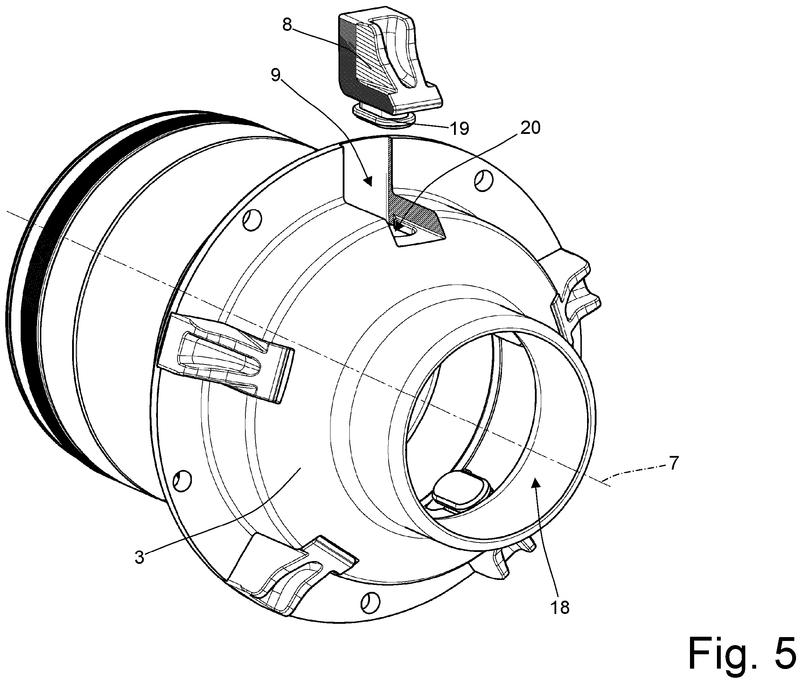

The rim 2 has a central, circular through-hole 17 (better illustrated in Figure 9) inside of which the screw 13, fastening bell 10 and part of the hub 3 are arranged. In addition, the hub 3 has a central, circular through-hole 18 (better illustrated in Figures 4 and 5) inside of which the screw 13 and fastening bell 10 are arranged.

As better illustrated in Figures 5, 6 and 9, each pulling insert 8 has a pushing appendage 19 that is radially oriented and projects towards the rotation axis 7 of the wheel (that is, inwards). According to what is better illustrated in Figure 5, each housing 9 of the hub 3 has a through groove 20, which is axially oriented (that is, parallel to the rotation axis 7) and through which the pushing appendage 19 of the respective pulling insert 8 is inserted. The pushing elements 12 of the fastening bell 10 are designed to engage and axially push the pushing appendages 19 of the pulling inserts 8; that is, the axial push is transmitted to the pulling inserts 8 through their pushing appendages 19.

According to a preferred embodiment, each pushing appendage 19 has a base, which is located radially more on the inside, and a rod, which connects the base to the respective pulling insert 8 and is narrower than the base.

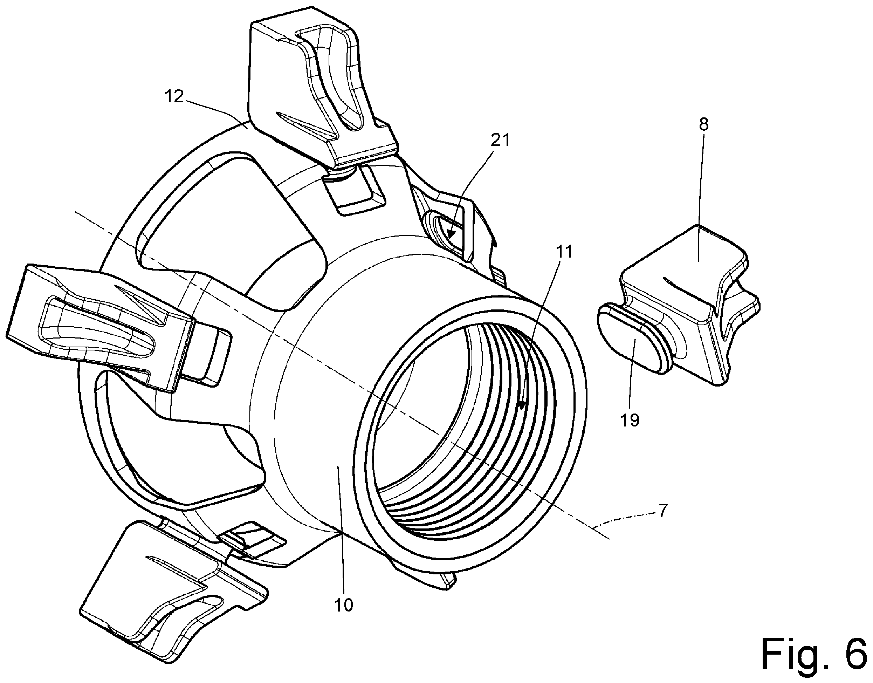

According to a preferred embodiment better illustrated in Figures 4 and 6, each pushing element 12 comprises a through groove 21, which is axially oriented (that is, parallel to the rotation axis 7) and through which the pushing appendage 19 of the respective pulling insert 8 is inserted. That is, the grooves 21 of the fastening bell 10 engage ("*catch*") the pushing appendages 19 of the pulling inserts 8 that project inside the hub 3 (through the grooves 20) to apply an axial push to the pulling inserts 8.

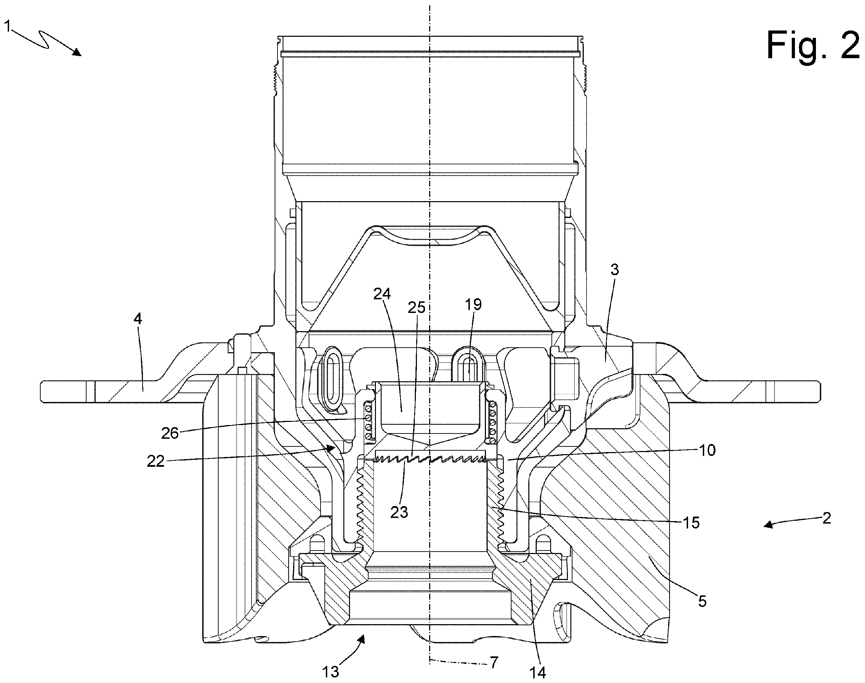

According to one preferred embodiment illustrated in Figure 2, the fastening system 1 comprises a safety system 22 that can be deactivated that only allows, if not deactivated, the screw 13 to rotate in the screwing direction. That is, when the safety system 22 is activated, the screw 13 can only rotate in the screwing direction, and to unscrew the screw 13, the safety system 22 must first be deactivated. In particular, the safety system 22 comprises an irreversible front toothing 23 formed on a base of the cylindrical body 15 of the screw 13 and a cylindrical stop element 24, which is arranged coaxially to the screw 13 and opposite the cylindrical body 15 of the screw 13, is mounted so as to axially slide and so as not to rotate and is provided with an irreversible front toothing 25 configured to be coupled to the front toothing 23. In addition, the safety system 22 comprises an elastic body 26 (in particular, a helical spring), which pushes the stop element 24 against the cylindrical body 15 of the screw 13 to couple the front toothing 25 to the front toothing 23. According to a preferred embodiment, the elastic body 26 is compressed between an annular rib of the stop element 24 and an annular rib of the fastening bell 10.

In other words, the safety system 22 comprises a pawl (consisting of the coupling between the two front toothings 23 and 24) that automatically engages to prevent the screw 13 from rotating in the unscrewing direction.

From the above, it is clear that the safety system 22 can be deactivated by moving the stop element 24 away from the cylindrical body 15 of the screw 13 by means of an axial push that compresses the elastic body 26. That is, in the absence of external intervention, the elastic body 26 pushes the stop element 24 against the cylindrical body 15 of the screw 13 by coupling the front toothing 25 of the stop element 24 with the front toothing 23 of the cylindrical body 15 to prevent the cylindrical body 15 (that is, the screw 13) from rotating in the unscrewing direction. Pushing the stop element 24 axially away from the cylindrical body 15 of the screw 13 (thus compressing the elastic body 26) separates the front toothing 25 of the stop element 24 from the front toothing 23 of the cylindrical body 15 and thus allows the cylindrical body 15 (that is, the screw 13) to rotate in the unscrewing direction as well.

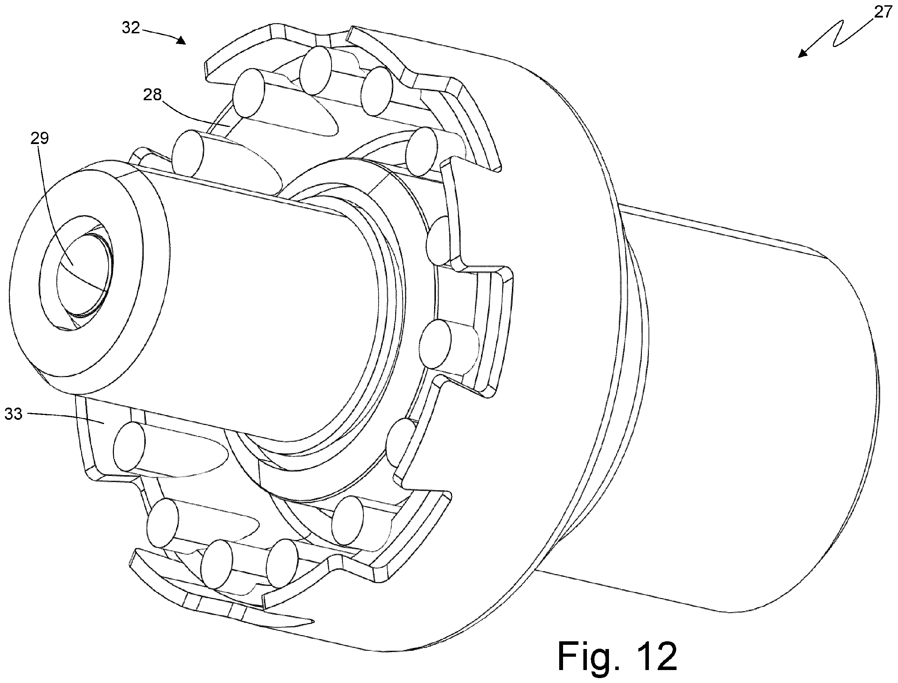

Common safety systems preventing the loss of the wheel nut do not guarantee that the nut cannot make a partial rotation, and with a thread pitch generally between 3 and 6 mm even a partial rotation of the wheel nut can cause a drastic loss of preload. In contrast, the safety system 22 features an irreversible front toothing system that allows free rotation during fastening and total locking in the opposite direction. The unscrewing of the screw 13 only takes place with the insertion of a tool 27 (shown in Figure 12 or, alternatively, another equivalent tool), disabling the safety system 22. The special feature of the safety system 22 is to objectively detect the correct engagement of the toothings 23 and 25, thus avoiding those intermediate positions of uncertainty.

By means of a mechanical (for manual fastening) or electronic (for fastening with an automatic screwdriver) position device, the individual clicks of the front toothing 23 and 25 can be detected, and each click corresponds to a linear increase in the fastening preload (it is evident that the significant clicks are those after the preset fastening torque has been reached).

Figure 12 shows a possible example of the tool 27 being used to tighten and unscrew the screw 13 (that is, configured to tighten and unscrew screw 13). The tool 27 has an annular part 28 configured to be coupled to the head 14 of the screw 13 and a central part 29, which is located at the centre of the annular part 28 and is configured to go through the screw 13 until it pushes the stop element 24 (to deactivate the safety system 22). In particular, the annular wall 28 has a series of cylinders configured to fit into the recesses 16 of the screw 13.

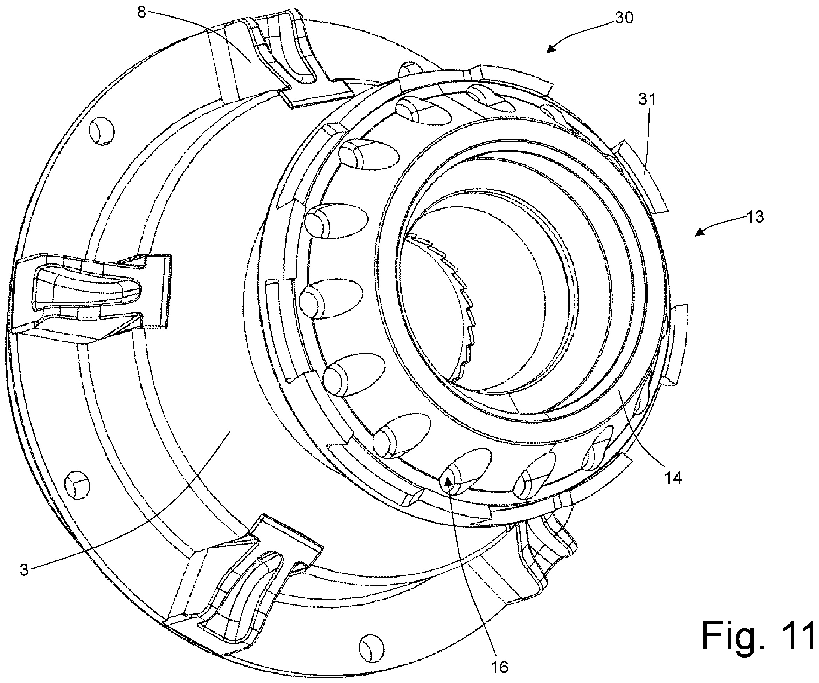

According to a possible embodiment illustrated in Figure 11, the hub 3 comprises an anchorage crown 30 that is integral with the hub 3, is arranged around the head 14 of the screw 13 (and is independent of the screw 13), and is shaped to provide an angular anchorage to the tool 27 configured to tighten and unscrew the screw 13. In particular, the anchorage crown 30 is annular in shape and has a series of axially oriented teeth 31; similarly, and as illustrated in Figure 12, the tool 27 also comprises an anchorage crown 32 that is integral to a frame of the tool 27, is shaped to couple with the anchorage crown 30 and thus has a series of axially oriented teeth 33.

The anchorage crowns 30 and 32 make it possible to eliminate the counter-reaction of the fastening torque, to which the operator reacts by opposing their own physical resistance to the screwdriver; in other words, the counter-reaction of the tool 27 will be discharged onto the coupling between the anchorage crowns 30 and 32 without transferring the resulting reaction to the operator.

According to a preferred embodiment, the fastening bell 10 is configured (designed) to be elastically deformable in the axial direction (that is, it can be elastically lengthened/shortened in the axial direction) to ensure constant preload over time (that is, the elastic extension of the fastening bell 10 makes it possible to recover play and micromovements). Due to the elastic extension of the fastening bell 10, the wedge-shaped pulling inserts 8 fit further into the compartments 6 of the rim 2, improving the coupling between the rim 2 and the hub 3.

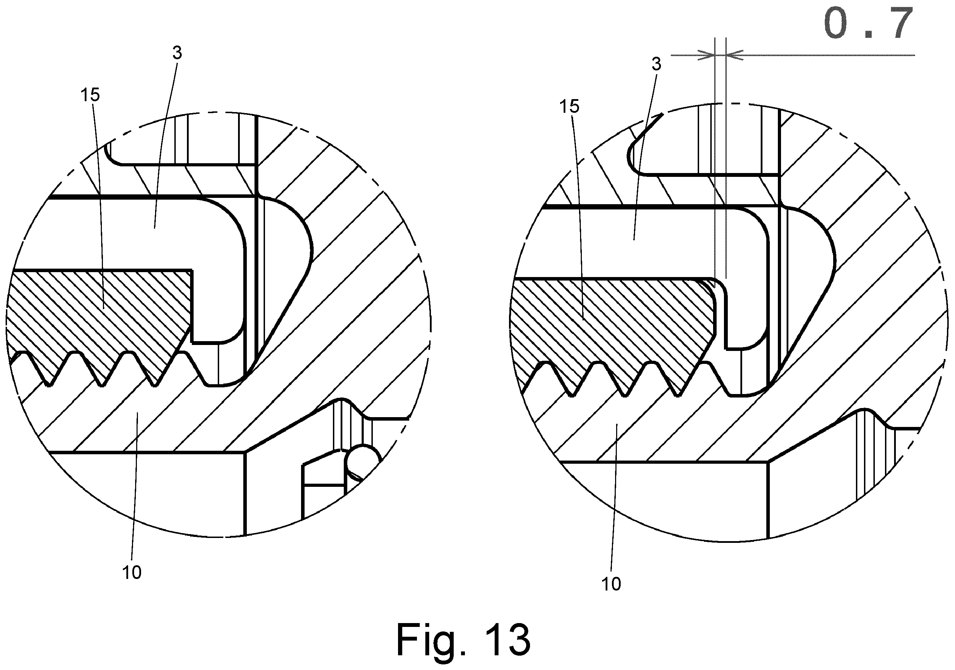

Figure 13 shows how the fastening is completed: in the first fastening step (illustrated on the right in Figure 13) the pulling inserts 8 are pre-loaded towards the housings 9 of the rim 2 until the gap of 0.7 mm between the hub 3 and the fastening bell 10 is eliminated (but, of course, the size of the gap could be different and is generally around 1-2 mm); once the support constraint is reached, the fastening is brought to the predetermined nominal fastening torque by increasing the fastening torque without any further axial displacement. That is, within the stroke of 0.7 mm, clearance between the pulling inserts 8 and the housings 9 of the rim 2 must be ensured.

Summarising what has been described above, the fastening system 1 provides for a "*pulling system"* with four/five/six or more (depending on the number of spokes 5 on the rim 2) wedge-shaped pulling inserts 8 that fit inside the corresponding compartments 6 of the rim 2. The pulling inserts 8 are attached to the hub 3 in a different way than in the past: while in conventional solutions, the pulling devices are cylindrical and screwed onto the front plane of the hub 3, in the fastening system 1, the pulling inserts 8 are wedge-shaped (in plan) and triangular laterally. The two sides are engaged on a precision compartment 6 of the rim 2 that extends both radially and frontally, giving each pulling insert 8 and to the pulling itself a structural rigidity that is much greater than in conventional solutions.

The contact area between each pulling insert 8 and the corresponding compartment 6 at the rim is also much larger than that of conventional cylindrical pulling devices (theoretically only one linear contact area); with the greater extension of this contact area, the specific pressure is reduced in order to reduce or eliminate deformation on the pulling contact.

The radial arrangement of the pulling inserts 8 physically follows the thermal expansion of the rim 2 and the hub 3; this allows the precision quality of machining to be increased in order to reduce play between the parts and their relative movements.

Inside the hub 3, the pulling inserts 8 are prismatically anchored to the fastening bell 10, which, when tightening the screw 13, pulls the pulling inserts 8, cancelling all coupling play by tightening the screw 13, while giving the fastening bell 10, pulling inserts 8 and rim 2 a compactness and rigidity not achievable with a conventional solution.

As mentioned above, the pulling inserts 8 are interlocked on the fastening bell 10 and, therefore, the fastening pack comprises: the screw 13, the fastening bell 10, the wedge-shaped pulling inserts 8, and the central area of the rim 2 where the compartments 6 are located. The fastening of the fastening pack is discharged onto the hub 3 as a support constraint of the system.

The characteristic feature of the fastening system 1, which differs fundamentally from conventional fastening systems, is that the fastening thread is not integral with the hub 3 but is located in a specific component, namely the fastening bell 10, which attracts the pulling inserts 8 towards itself, creating a rigid block integral with the rim 2. The objective is to "*uncouple"* the hub 3 from the fastening, so that the fastening pack, within the elasticity limits of its components, can implement relative micromovements and expansions without the fastening being compromised (as is clear from the fastening steps illustrated in Figure 13). Another advantage, which is no less important, is that the fastening bell 10 can be optimised in terms of axial deformation, so that the fastening remains in a wide elastic range, independent of all other stresses that will conversely remain on the hub 3.

The embodiments described herein may be combined with each other.

The fastening system 1 described above has numerous advantages.

Firstly, the fastening system 1 described above envisages a series of solutions, conceptually different from the conventional solutions, with the objective of a significant reduction in fastening torque (in contrast to the current trend) within an elastic range capable of absorbing the physiological yield of the fastening pack. As an example, the expected fastening torque is in the order of 250 Nm (to be optimised according to the car's maximum lateral loads).

In addition, the above-described fastening system 1 provides for a precision pulling system that ensures that play during the fastening step is eliminated.

The fastening system 1 described above provides for the passive safety system 22, which automatically secures the fastening in position at a predetermined fastening preload.

The fastening system 1 described above is easily managed (can be assembled and disassembled) by a single operator using standard tools with repeatable and safe results.

Finally, the fastening system 1 described above is compact and lightweight and is relatively inexpensive and easy to produce.

### LIST OF REFERENCE NUMBERS IN THE FIGURES

- 1: fastening system
- 2: rim
- 3: hub
- 4: bell
- 5: spokes
- 6: compartments
- 7: rotation axis
- 8: pulling inserts
- 9: housings
- 10: fastening bell
- 11: threaded hole
- 12: pushing elements
- 13: screw
- 14: head
- 15: cylindrical body
- 16: recesses
- 17: through-hole
- 18: through-hole
- 19: pushing appendage
- 20: groove
- 21: groove
- 22: safety system
- 23: irreversible front toothing
- 24: stop element
- 25: irreversible front toothing
- 26: elastic body
- 27: tool
- 28: annular part
- 29: central part
- 30: anchorage crown
- 31: teeth
- 32: anchorage crown
- 33: teeth

## Claims

1. A wheel assembly for a road vehicle comprising: a rim (2) of a wheel, a rotary hub (3), and a fastening system (1), which secures the rim (2) and the hub (3);
the wheel assembly is **characterised in that:**
the rim (2) has a plurality of compartments (6), each having the shape of a wedge and having a first open side in a rear plane of the rim (2) perpendicular to a rotation axis (7) of the wheel and a second open side perpendicular to the first side and facing the rotation axis (7) of the wheel;
the fastening system (1) comprises a plurality of pulling inserts (8), each having the shape of a wedge and being designed to be inserted into a corresponding compartment (6) obtained in the rim (2); and
the hub (3) has a plurality of housings (9), each shaped so as to accommodate a respective pulling insert (8) allowing the pulling insert (8) to axially slide within the housing (9).

2. The wheel assembly according to claim 1 and comprising:
a fastening bell (10), which is centrally provided with a threaded hole (11) and has a plurality of pushing elements (12), each designed to engage a respective pulling insert (8) so as to axially push the pulling insert (8) into a respective compartment (6) of the rim (2); and
a screw (13) provided with a head (14) and with an externally threaded cylindrical body (15) designed to be screwed into the threaded hole (11) of the bell.

3. The wheel assembly according to claim 2, wherein:
the rim (2) centrally has a first through hole (17) accommodating, on the inside, the screw (13), the fastening bell (10) and part of the hub (3); and
the hub (3) centrally has a second through hole (18) accommodating, on the inside, the screw (13) and the fastening bell (10).

4. The wheel assembly according to claim 2 or 3, wherein:
each pulling insert (8) has a pushing appendage (19), which is radially oriented and projects towards the rotation axis (7) of the wheel;
each housing (9) of the hub (3) has a first through groove (20), which is axially oriented and through which the pushing appendage (19) of the respective pulling insert (8) is inserted; and
the pushing elements (12) of the fastening bell (10) are designed to engage and axially push the pushing appendages (19) of the pulling inserts (8).

5. The wheel assembly according to claim 4, wherein each pushing element (12) comprises a second through groove (21), which is axially oriented and through which the pushing appendage (19) of the respective pulling insert (8) is inserted.

6. The wheel assembly according to claim 4 or 5, wherein each pushing appendage (19) has a base, which is located radially more on the inside, and a rod, which connects the base to the respective pulling insert (8) and is narrower than the base.

7. The wheel assembly according to one of the claims from 2 to 6, wherein the screw (13) is centrally perforated and the head (14) of the screw (13) has an annular shape having a series of axially oriented recesses (16).

8. The wheel assembly according to one of the claims from 2 to 7 and comprising a safety system (22), which can be deactivated and, if it is not deactivated, allows the screw (13) to only rotate in one screwing direction.

9. The wheel assembly according to claim 8, wherein the safety system (22) comprises:
a first irreversible front toothing (23) obtained on a base of the cylindrical body (15) of the screw (13);
a cylindrical stop element (24), which is arranged coaxially to the screw (13) and in front of the cylindrical body (15) of the screw (13), is mounted so as to axially slide and so as not to rotate and is provided with a second irreversible front toothing (25) configured to be coupled to the first front toothing (23); and
an elastic body (26), which pushes the stop element (24) against the cylindrical body (15) of the screw (13) to couple the second front toothing (25) to the first front toothing (23).

10. The wheel assembly according to claim 9, wherein the elastic body (26) is compressed between an annular rib of the stop element (24) and an annular rib of the fastening bell (10).

11. The wheel assembly according to claim 9 or 10, wherein the safety system (22) can be deactivated by moving the stop element (24) away from the cylindrical body (15) of the screw (13) by means of an axial push that compresses the elastic body (26).

12. The wheel assembly according to claim 11 and comprising a tool (27) having an annular part (28) configured to be coupled to the head (14) of the screw (13) and a central part (29), which is located at the centre of the annular part (28) and is configured to go through the screw (13) until it pushes the stop element (24).

13. The wheel assembly according to one of the claims from 2 to 12, wherein the hub (3) comprises an anchoring crown (30), which is integral to the hub (3), is arranged around the head (14) of the screw (13), is designed to provide an angular anchoring for a tool (27) configured to screw and unscrew the screw (13), preferably has an annular shape and, preferably has a series of axially oriented teeth (31).

14. The wheel assembly according to one of the claims from 2 to 13, wherein the fastening bell (10) is configured to be elastically deformable in an axial direction.

15. The wheel assembly according to one of the claims from 1 to 14 and comprising a single pulling insert (8) for each spoke (5) of the rim (2) so that for each spoke (5) of the rim (2) there is one single compartment (6) designed to receive a respective pulling insert (8).
